Europäisches Patentamt

European Patent Office

Office européen des brevets

(11) Numéro de publication: **0 213 248**
**A1**

## (12) DEMANDE DE BREVET EUROPEEN

(21) Numéro de dépôt: 85430025.8

(22) Date de dépôt: 09.08.85

(51) Int. Cl.⁴: **G01B 5/255** , G01M 17/06

(43) Date de publication de la demande:
**11.03.87 Bulletin 87/11**

(84) Etats contractants désignés:
**DE GB IT**

(71) Demandeur: **Sorlin, Roger Alexis**
**2795, Boulevard Paul Valéry**
**F-34100 Montpellier(FR)**

(72) Inventeur: **Sorlin, Roger Alexis**
**2795, Boulevard Paul Valéry**
**F-34100 Montpellier(FR)**

(54) **Banc d'essai de contrôle dynamique et simultané de la géométrie d'un véhicule suivant sa trajectoire théorique.**

(57) L'invention consiste à matérialiser l'axe de poussée XX' d'un véhicule en déplacement et de relever la trajectoire de chacune des roues par rapport à cet axe.

Par ce procédé, les variations " d'assiettes" indiquent l'état d' usure, de faiblesse de la suspension et du châssis ainsi que la hauteur de crémaillère.

Pour satisfaire à ces essais, le banc d'essai est constitué d'un châssis 1 recevant en son axe médian XX' deux guides 2 et 3 sur lesquels se déplacent deux chariots solidaires du vérin 6. De part et d'autre des guides (2-3) sont installées des plaques mobiles 7.8.9 de parcours et d'alignements. Le véhicule accède au banc sur les plaques 8-9. Le vérin 15 pousse les plaques 8-9 supportant le véhicule pour amener les flancs des pneus contre les butées 17 installées sur le rail 16, préalablement réglées en fonction de la voie du véhicule. Positionné sur l'axe XX' le véhicule est enserré à l'aide du vérin 6 par les préhenseurs 18 situés sur les chariots 4 et 5.Maintenu en préhension (4.5.6.18) le véhicule se déplace et parcourt les plaques de mesure (10-11). Il s'immobilise sur les plaque (7-8). Les plaques 10-11 indiquent en mm/mètre l'écart de trajectoire de chacune des roues par rapport à l'axe XX'. Les crics 19 et chaine à vérin 20 permettent de modifier l'assiette du véhicule.

Le dispositif 21.22.23. consiste à mesurer l'angle formé par chaque essieu avec l'axe XX'.

Fig.1

## BANC DE CONTROLE DE GEOMETRIE SIMULTANEE EN DYNAMIQUE

La presente invention concerne les dispositifs du type "contrôle de la géométrie " des trains roulants et directionnels d'un véhicule automobile.

Dans les dispositifs de contrôle de géométrie actuellement connus, tous les réglages sont effectués en STATIQUE (véhicule à l'arrêt) en prenant comme base de contrôle le flanc de la jante de roue, souvent déformée par heurts et contraintes mécaniques en fonction du kilométrage. l'exploitation de tels dispositifs nécessite une certaine compétence technologique tant dans la mise en oeuvre des élèments de mesure que dans l'interprétation des paramètres relevés.

Ils sont généralement du type à projection lumineuse, donc délicats et nécessitant un étalonnage fréquent.

Sachant que dans le presque totalité de la construction automobile actuelle, les paramètres " angle de chasse et angle de carrossage " sont définis de construction et par voie de conséquence non réglables.

Ces angles se modifient :

-par usure des articulations et pivots

-par vieillissement des supports, carrosserie-châssis ou par accident modifiant les élèments porteurs.

Or un nombre important de ces véhicules est réparé plus sur le plan esthetique que sur le plan technique, passage au marbre, contrôle d'avant train, etc...

Pour remédier aux inconvénients énumérés, la présente invention a été conçue et réalisée pour permettre à quiconque de pouvoir effectuer un contrôle géométrique rapide et précis.

La présente invention concerne un instrument de mesure en dynamique de la dérive de chacune des roues d'un véhicule en fonction de l'axe de poussée XX' d'un ensemble châssis suspension - (axe médian du véhicule).

Cette invention apporte un enseignement par visualisation en l'instant par rapport à l'axe XX' du comportement simultané de chaque roue, en fonction :

    1°) de l'état mécanique de l'ensemble suspension carrosserie-châssis

    2°) de la position de la crémaillère, sous variation d'assiette du châssis -en plongée - véhicule au freinage

-en cabré -accélération ou surcharge sur l' essieu arrière

-en faiblesse -aux points d'attache de la suspension.

    3°) du parallélisme des essieux et des roues.

    4°) de la perpendiculaire des essieux en fonction de l'axe théorique XX'.

Ce banc est constitué d'un châssis long de 7200 mm., large de 2200 mm., permettant la réception de véhicules avec empattement de 2000 à 3200 mm. et voies d'essieux de 1200 à 1800 mm.

En son axe médian ( axe de poussée XX' ) (I), il reçoit deux guides (2 et 3) absolument parallèles sur lesquels se déplacent deux chariots ( 4 et 5) d'une largeur de 400 mm et respectivement long de 1200 et 600 mm.

Les chariots 4 et 5 sont solidaires du vérin hydraulique (6) permettant un déplacement de ces derniers de 2500 à 5200 mm. (distance entre pare-choc d'un véhicule).

De part et d'autre des guides 2 et 3, sont installés des plaques à déplacement latéral montées sur coulisses à billes. Les plaques 7,8,9 sont dites d'alignement et de parcours. Les plaques 10 et 11 au nombre de 4 ont une longueur de 1000 mm. et sont dotées d'un dispositif de mesure de déplacement bilatéral ± 25 mm. -remise à zéro par vérins pneumatiques 12. Lesplaques 7 ont un déplacement bilatéral ± 50 mm. avec retour ± 0 par équilibrage à ressort 13.

Les plaques 8 et 9 ont un déplacement latéral de $^{+150}_{-0}$ mm.

Ces plaques sont dotées de vérins pneumatiques 14 pour le retour à 0 et 15 pour le déplacement + 150 mm. Ces plaques sont utilisées pour l' alignement du véhicule sur les butées 17.

Un rail 16 reçoit deux dispositifs 17 servant de butée d'alignement du véhicule suivant l'axe médian XX' en prenant appui sur le flanc des pneumatiques.

Les chariots 4 et 5 sont chacun équipés d'une butée préhensile 18 prenant appui sur les pare-chocs du véhicule. Ces butées sont réglables en hauteur pour s'adapter aux différents types de véhicule et assurer le maintien de ce dernier suivant l'axe XX' lors de son déplacement en mesure et contrôle.

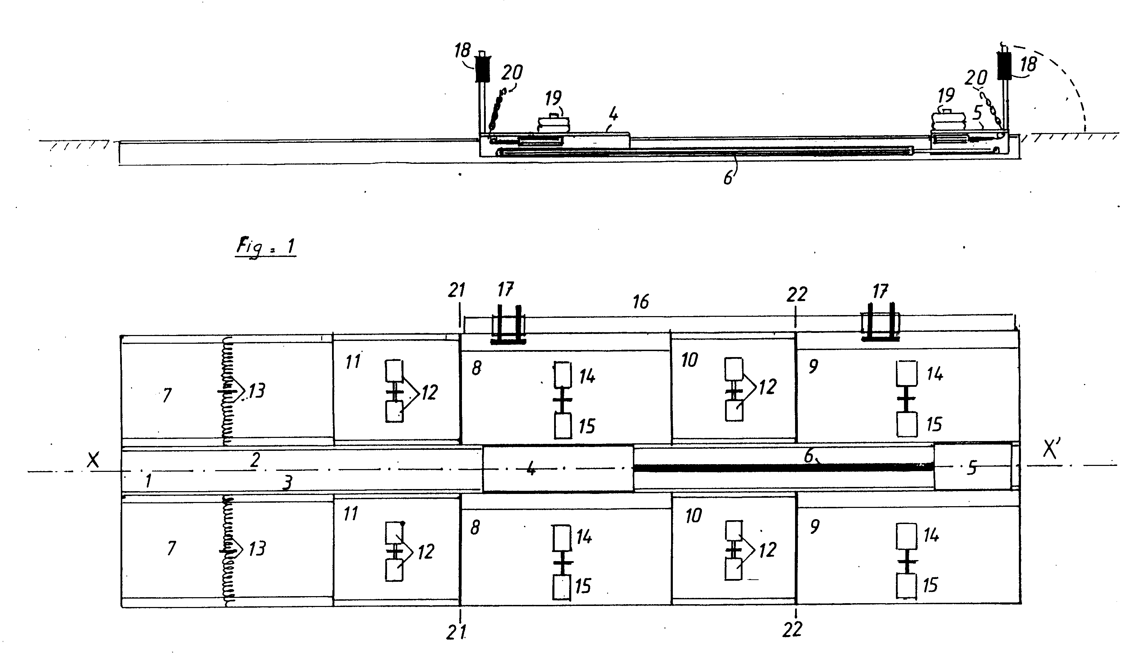

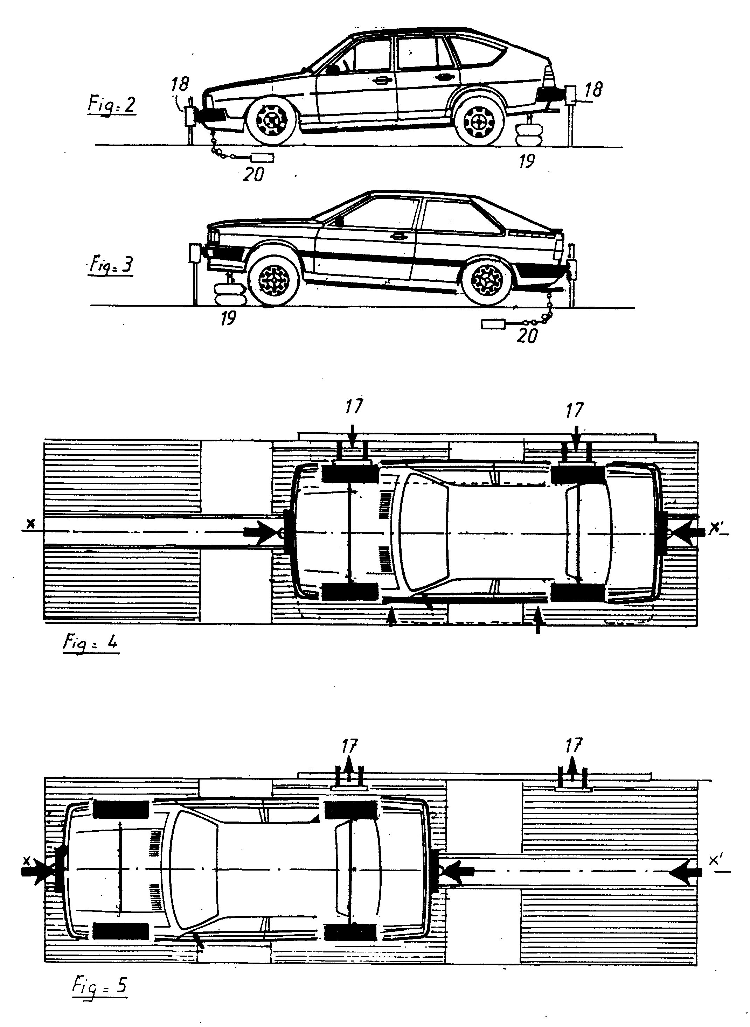

Les crics pneumatiques 19 et le dispositif chaine à vérin 20 servent à placer le véhicule dans les configurations de plongée (freinage) de délestage (dos d'âne) et de surcharge de l'essieu AR (Fig. 2 et 3).

Ces configurations sont importantes pour le contrôle de hauteur de crémaillère et pour l'estimation de la faiblesse du châssis par vieillissement.

En pratique, le véhicule accède au banc par les plaques 9 et s'immobilise, l'essieu AV sur les plaques 8 et l'essieu AR sur les plaques 9. Les butées 17 sont réglées pour representer les demi-largeurs de voie. Les plaques 8 et 9 se déplacent au moyen des vérins 15 pour mettre les pneumatiques en appui contre les butées 17. Le véhicule est alors placé, son axe de trajectoire confondu avec l'axe XX' du banc. Par l'utilisation du vérin 6, les chariots 4 et 5 en se rapprochant, mettent les préhenseurs 18 en appui sur les pare-chocs, assurant le maintien rigoureux du véhicule sur l'axe de poussée XX' (Fig 4 )

Le véhicule va se déplacer pour venir placer l'essieu AV sur les plaques 7 et l'essieu AR sur les plaques 8. Dans son déplacement les quatre roues parcourerons les plaques 10 pour les roues AV et les plaques II pour les roues AR.

Il est rappelé que les plaques 10 et 11 ont une longueur de 1000 mm. soit un mètre. Qu'elles sont montées sur glissière à bille et ont un déplacement latéral ± 25 mm. Ce déplacement est mesuré par un compteur de déplacement et de position électronique avec mémoire et remise à zéro. Le déplacement est précis au 1/10ème de millimètre. Sous l'effet de la poussée latérale du pneumatique en parcours, la table se déplace de manière précise indiquant la mesure de la dérive de la roue par rapport à l'axe de poussée XX'.

L'étude de la géométrie d'un véhicule oblige le concepteur à tenir compte du ripage du pneumatique sur le sol, pour le confort , l'adhérence et l'usure minimum des pneumatiques.

Ce ripage doit être compris entre 0 et 1,50 m. par Km ou 1,5 mm. par mètre pour chacune des roues.

Pour la mesure de l'angle formé par un essieu en fonction de l'axe de poussée XX' du véhicule, le banc est dôté d'un élèment qui mesure la distance parcourue par une roue d'un même essieu par rapport à l'autre pour franchir une ligne qui est perpendiculaire à l'axe de poussée XX'. Cette ligne AA' est le seuil des plaques de mesure 10 (Page 4) pour l'essieu avant et le seuil des plaques de mesure 11 pour l'essieu arrière.

Au seuil de chacune des plaques 10 et 11 est installé un contact (21 et 22) qui déclenche ou interrompt le système de mesure de déplacement - (23) qui équipe chacun des chariots 4 et 5. Ce système est au 1/10ème de millimètre. Il est constitué d'une roue entrainée par le guide 2 dans le déplacement du chariot (4-5) Cette distance en fonction de la voie permet de déterminer l'angle formé par l'essieu et l'axe de poussée XX'.

Cette conception de mesure est très importante pour un contrôle précis des véhicules et tout particulièrement pour ceux qui possèdent un empattement différent comme par exemple les Renault R 16.

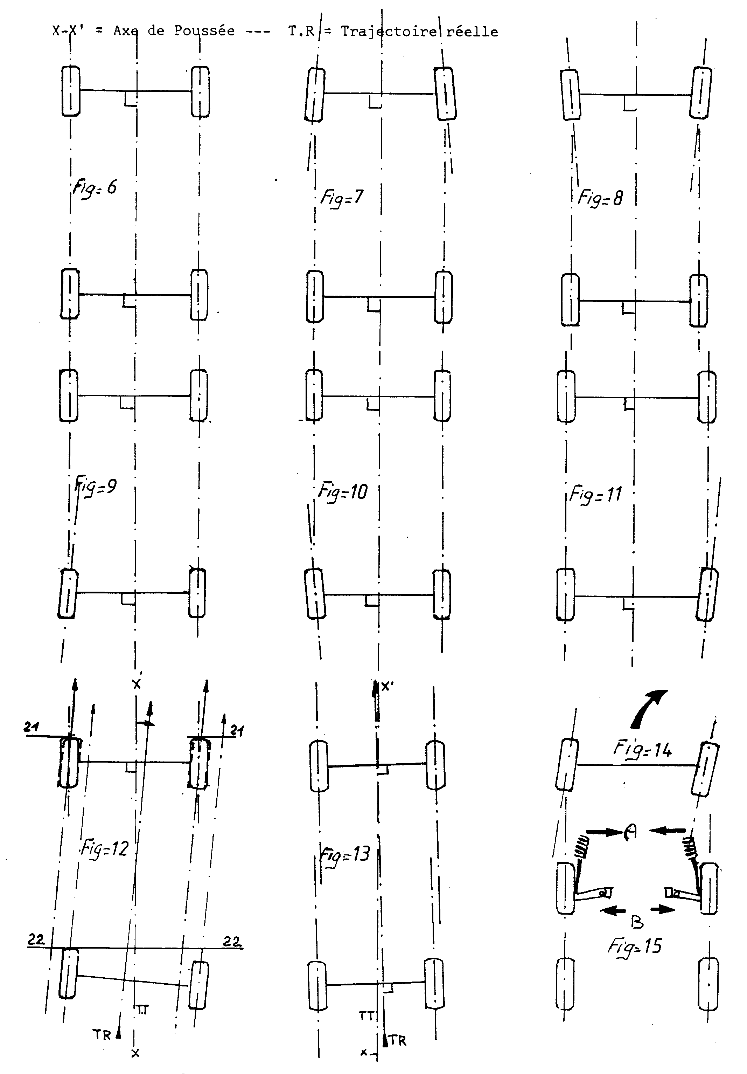

A titre d'exemple, interprétation de certains relevés, (Fig. 6). Chaque roue AV et AR indique un ripage nul.

Déduction : les roues ont suivi les lignes A et B parallèles à l'axe de poussée XX'. La géométrie est correcte.

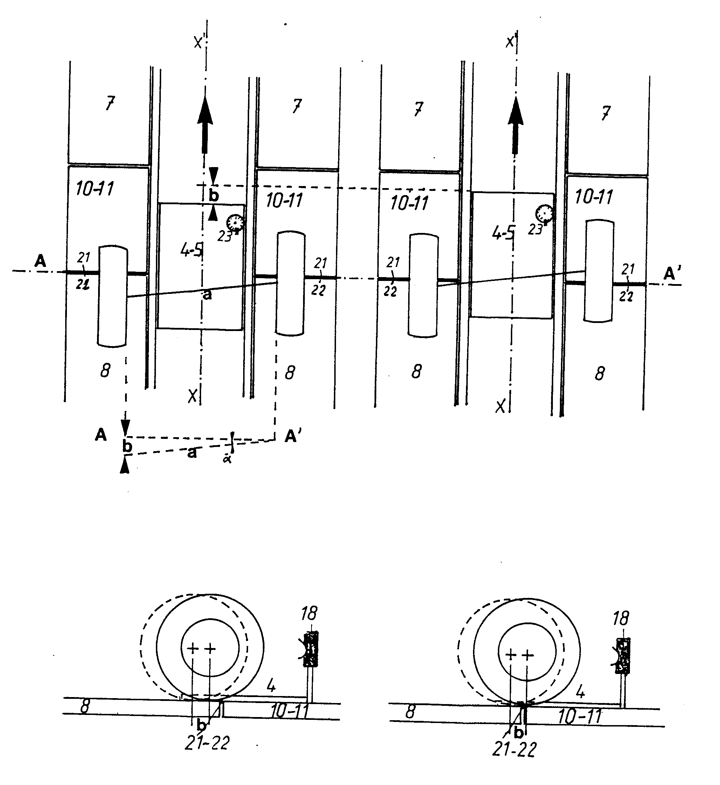

Le même véhicule est placé en configuration de plongée(Voir Fig.2 Page 2). Interprétation (Fig. 7). Chaque roue AV indique un ripage négatif plus important. Chaque roue AR indique un ripage nul.

Déduction : la hauteur de crémaillère est incorrecte.

Dans la configuration délestage ou surcharge sur l'essieu AR (Voir Fif. 2), on obtient les indications de la Fig. 8 soit un ripage positif des roues AV, justifiant une mauvaise hauteur de crémaillère.

Fig. 9 -Le ripage des roues AV est correct.

Le ripage de la roue AR droit est correct

Le ripage de la roue AR gauche est négatif.

Le véhicule aura pour comportement un louvoiement de l'essieu AR (phénomène caravane) en ligne droite. Il sera légèrement sur vireur en virage à gauche et anormalement sous vireur en virage à droite.

Fig. 10-Le ripage des roues AV est correct

Le ripage de la roue AR gauche est positif

Le ripage de la roue AR droit est correct

Le véhicule aura le même comportement de louvoiement en ligne droite, et légèrement sous vireur en virage à gauche.

Fig. 11- est symétriquement l'inverse de la Fig. 10

Le comportement en virage est donc inversé.

Fig. 12-Les roues AV ont un ripage correct, leur trajectoire est parallèle à l'axe XX'.

La roue AR droite a un ripage positif et la roue AR gauche a un ripage négatif. La projection du ripage des roues AR montre qu'elles sont parallèles entre elles. Leur projection forme un angle ouvert à droite par rapport à l'axe XX'.

Le dispositif 21 informe que les roues AV attaquent simultanément les plaques de mesure 11 et le dispositif 22, que la roue AR gauche a attaqué la plaque de mesure 10 avant la roue AR droite.

Cette information confirme bien que l'essieu AV est perpendiculaire à l'axe XX' et que l'essieu AR n'est pas perpendiculaire à l'axe XX'. Ce véhicule en déplacement routier roulera en " CRABE " avec un léger braquage à droite.

Fig. 13-Les roues AV et AR gauche ont un ripage positif et les roues AV et AR droite ont un ripage négatif. Tous ces ripages sont parallèles entre eux. Le dispositif 21 et 22 indique le même écart d'attaque des plaques 10 et 11.

Ces informations confirment que les essieux forment un angle ouvert à gauche par rapport à l'axe XX'.

Ce véhicule en déplacement routier roulera en "CRABE " mais cette fois sans braquage de la direction.

Fig. 14-Dans une configuration en " PLONGEE " (Voir Fig. 2) le train avant peut prendre un angle de braquage. Cet angle est provoqué par la variation des attaches de suspension par faiblesse de construction ou vieillissement de la structure carrosserie-châssis.

En effet, on constate Fig. 15 que la cote A se réduit et que la cote B augmente modifiant ainsi le géométrie du train avant.

## Revendications

1 Banc d'essai de contrôle dynamique et simultané de la géométrie d'un véhicule suivant sa trajectoire théorique caractérisé en ce qu'il est équipé d'un chassis recevant en son axe médian XX', deux guides (2 et 3 ) sur lesquels se déplacent deux chariots (4 et 5).

2 Banc d'essai selon la revendication 1 caractérisé en ce que de part et d'autre des guides - (2 et 3 ) sont installées des plaques à déplacement bilatérales (7.8.9.10.11) montées sur coussinets à billes.

3 Banc d'essai selon la revendication 2 caractérisé en ce qu'il reçoit un rail 16 parallèle à l'axe XX' supportant deux butées réglables 17 d'appui sur les flancs de pneus.

4 Banc d'essai selon les revendications 2 et 3, caractérisé en ce que les plaques 8 et 9 supportant le véhicule sont déplacées par les vérins 15 jusqu'au contact des flancs de pneus avec les butées 17.

5 Banc d'essai selon les revendications 1 et 4 caractérisé par le montage d'un vérin 6 contractant les chariots 4 et 5 équipés de préhenseurs 18.

6 Banc d'essai selon la revendication 1 caractérisé par le montage sur les chariots 4 et 5 de crics 19 et de vérins à chaine 20.

7 Banc d'essai selon la revendication 5 caractérisé en ce que les préhenseurs 18 se règlent en hauteur.

8 Banc d'essai selon la revendication 2 caractérisé en ce que les plaques 10 et 11 comportent un élèment de mesure de déplacement latéral et un rappel à zéro par vérins 12.

9 Banc d'essai selon la revendication 2 caractérisé par la présence, au seuil des plaques 10 et 11, de contacts 21 et 22.

10 Banc d'essai selon les revendications 1 et 9 caractérisé par le calculateur de parcours 23 commandé par les contacts 21-22.

Fig. 1

Fig. 2

Fig. 3

Fig. 4

Fig. 5

X-X' = Axe de Poussée --- T.R = Trajectoire réelle

Fig. 6

Fig. 7

Fig. 8

Fig. 9

Fig. 10

Fig. 11

Fig. 12

Fig. 13

Fig. 14

Fig. 15

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| A | DE-A-3 126 151 (A. ROHE GmbH)<br>* Figure 1; revendication 3; page 6, ligne 5 - page 9, ligne 2 * | 1,9,10 | G 01 B 5/255<br>G 01 M 17/06 |
| | --- | | |
| A | US-A-3 303 511 (BJORN)<br>* Figures 1,2; colonne 1, lignes 27-50; colonne 2, ligne 16 - colonne 3, ligne 6 * | 2 | |
| | --- | | |
| A | DE-A-1 448 392 (DAIMLER-BENZ AG)<br>* Figures 1-6,13-16; page 3, ligne 29 - page 4, ligne 9; page 6, ligne 15 - page 13, ligne 13; page 14, ligne 6 - page 16, ligne 17 * | 4 | |
| | ----- | | |

DOMAINES TECHNIQUES
RECHERCHES (Int. Cl.4)

G 01 B 5/00
G 01 B 7/00
G 01 B 13/00
G 01 B 21/00
G 01 M 17/00

Le présent rapport de recherche a été établi pour toutes les revendications

| Lieu de la recherche | Date d'achèvement de la recherche | Examinateur |
|---|---|---|
| LA HAYE | 14-04-1986 | DRYSDALE N. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82